# EUROPEAN PATENT APPLICATION

(11) **EP 4 016 220 A1**
(43) Date of publication of application: **22.06.2022**
(21) Application number: 20214607.2
(22) Date of filing: 16.12.2020
(51) Int. Cl.: G05B 23/02

(54) **ASSISTANCE APPARATUS AND METHOD FOR AUTOMATICALLY IDENTIFYING FAILURE TYPES OF A TECHNICAL SYSTEM**

(71) Applicant: Siemens Aktiengesellschaft, 80333 München (DE)
(72) Inventor: The designation of the inventor has not yet been filed

(57) **Abstract**

Assistance apparatus for automatically identifying failure types of a technical system by analysing monitored time series of more than one different sensor data, each sensor data representing a different parameter of the technical system, comprising at least one processor configured to
- determine for each sensor data a set of specific temporal courses of first time series of said sensor data of said sensor and assign a symbolic representation to each of the different specific temporal courses,
- provide at least one failure pattern, each failure pattern representing one failure type out of several failure types of the technical system and each failure pattern consisting of a failure-type-specific combination of specific temporal courses of the first time series of at least a subset of sensor data in the same segment of time, wherein each specific temporal course is represented by the respective symbolic representation,
- obtain more than one monitored time series of sensor data of the technical system, each of them divided into a sequence of time segments, and automatically assign to each time segment a symbolic representations (20, 27) according to the temporal course of the sensor data in the time segment,
- calculate a similarity measure for the set of symbolic representations of a selected time interval of the obtained more than one monitored time series of sensor data and all failure patterns,
- determine a ranking of the failure pattern depending on decreasing values of the calculated similarity measure, and
- output the ranking via a user interface.

## Description

The present disclosure relates to an assistance apparatus and a method for automatically identifying failure types of a technical system, e.g., for preventive maintenance, by analysing monitored time series of more than one different sensor data, each sensor data representing a different parameter of the technical system.

In various technical fields, there is a need to monitor operation of technical systems. For example, in the field of oil and gas production, heavy industries, transportation and automation systems, a large number of machines, drives, motors, pumps or presses are monitored to detect or even predict abnormal operation and thereby enable, e.g., preventive maintenance to insure high availability of the technical systems. One important application field of sensors is monitoring the functionality of electrical submersible pumps which are mining oil downhole. Sensors are installed to measure e.g. ground-, head- and stub-pressure as well as oil temperature and motor current. These sensors allow monitoring the state of the pump system as a whole.

Normal behaviour or anomalies can be identified or even predicted by artificial intelligence-based approaches for example by machine learning. However, a lot of reliable historic data containing different types of failures are needed to train such a machine learning model. Further on, machines follow physical laws and their behaviour can be theoretically described by equations. While reality is usually more complex, the equations lead to valuable rules which typically rely on fixed thresholds. These rules are quite general in nature and it is hard to judge if a rule can be applied in a certain situation.

On the other hand, a domain expert knows a technical system by heart and often can judge if maintenance is needed based on his/her experience and by looking up data. However manual monitoring by operation staff lacks deeper analysis of the available data. Subtle changes in the technical system happening over long time periods can easily be missed. Also, rapid changes can be missed if the machine behaviour is not permanently monitored.

Therefore, it is the object of the present application to improve failure detection and identification of failure types of a monitored technical system based on multivariate time-dependent sensor data to attain preventive maintenance.

This object is solved by the features of the independent claims. The dependant claims contain further developments of the invention.

A first aspect relates to an assistance apparatus for automatically identifying failure types of a technical system, e.g. for preventive maintenance, by analysing monitored time series of more than one different sensor data, each sensor data representing a different parameter of a technical system, comprising at least one processor configured to
- determine for each sensor data a set of specific temporal courses of first time series of said sensor data of said sensor and assign a symbolic representation to each of the different specific temporal courses,
- provide at least one failure pattern, each failure pattern representing one failure type out of several failure types of the technical system and each failure pattern consisting of a failure-type-specific combination of specific temporal courses of the first time series of at least a subset of sensor data in the same segment of time, wherein each specific temporal course is represented by the respective symbolic representation,
- obtain more than one monitored time series of sensor data of the technical system, each of them divided into a sequence of time segments, and automatically assign to each time segment a symbolic representations- according to the temporal course of the sensor data in the time segment,
- calculate a similarity measure for the set of symbolic representations of a selected time interval of the obtained more than one monitored time series of sensor data and all failure patterns,
- determine a ranking of the failure pattern depending on decreasing values of the calculated similarity measure, and
- output the ranking via a user interface.

The assistance apparatus analyses the behaviour of a technical system in a certain segment in time in relation to root causes for different failure types. A failure type more specifically relates to the cause of the failure, e.g. a broken shaft, a hole in a tubing. Therefore, the assistance apparatus assists in identifying long-term trends as well as rapid changes in the behaviour of the monitor technical system. If a rule exists that describes the failure type in a formal way, abnormal behaviour of the technical system can be identified without any training of a machine learning algorithm with time series of sensor data of such failure situations. The cumbersome and error prone procedure of manually monitoring the sensor data behaviour and comparing rules with sensor values is enhanced by the assistance apparatus. Failures will be detected more reliable, earlier and faster.
Preferably, the set of symbolic representations are assigned to each time segment according to the temporal course of each of the sensor data in the time segment by an assignment algorithm. Depending on the used assignment algorithms an uncertainty of the algorithm for a match can be visualised and considered when sorting the root causes for the different failure types.

In a preferred embodiment the assistance apparatus is configured such that the specific temporal courses are differentiated with respect to a type of gradient of the temporal course of the time series of sensor data, especially a positive or negative gradient, or with respect to a fluctuation of the gradient for a time series of sensor data with steady course over time.

This provides a classification of various specific temporal courses into main classes of temporal courses, wherein each class of temporal course provides a characteristic behaviour which contributes to a failure type of the technical system or characterises at least a trend in the operation mode or degradation of the technical system.

In a further embodiment the assistance apparatus is configured such that the specific temporal courses are differentiated with respect to a value range of the gradient or a magnitude of change in sensor data value.

This provides a fine granularity of specific temporal courses and respective symbolic representations, where the sensor data changes in a low, middle or high magnitude of its value over time. Changes in the sensor value of such classes of magnitude of change provide a valuable hint to specific failure types and provide therefore significant information to identify the root cause, i.e. the reason, for a probable failure in the technical system.

In a further embodiment the assistance apparatus is configured such that the time segments are of different length in time depending on the duration of the respective temporal course.

This increases the efficiency of the processing of the time series sensor data as the number of segments is decreased compared to e.g. segments of small but constant length. Further, the length in time of a segment is not fixed but defined by duration in time the same type of temporal course prevails. A current segment is closed, only if a change in the temporal course of the sensor data has been detected. This means that for time series of different sensor data the segment length can be different. This allows an assignment and analysis of correct specific temporal courses and the related symbolic representation can be analysed and output.

In a preferred embodiment the failure-type-specific combination of specific temporal courses of at least a subset of time series of sensor data in the same segment of time is determined by domain knowledge.

Domain knowledge on failure characterisation of different failure types is described in literature or can be provided by personal knowledge of experienced domain experts. Further on, domain knowledge can be based on knowledge from the manufacturer of the technical system or simulations performed for the same or similar technical system.

In a preferred embodiment the similarity measure is a binary matching and the ranking is determined depending on the number of matches.

Binary matching of the symbolic representations of the segment with all failure patterns requires few processing capacities and can therefore be performed fast, e.g. in real-time and/or for a high number of segments in short time. Further the ranking of the failure patterns based on binary matching is easy to understand by a user of the apparatus and provides therefore trust in the algorithm. In a variation of the embodiment, different weights are assigned to the symbolic representations and the similarity measures is based on weighted binary matching. The result of the similarity measure represents a probability of the symbolic representations of the considered time segment matching the symbolic representation of the failure pattern.

In a preferred embodiment the user interface is configured as a graphical user interface and the symbolic representations of a selected time interval and the symbolic representations of the failure patterns are visualized according to the determined ranking for the selected time interval at the graphical user interface.

This provides a comprehensive overview for operating personnel to interpret the operation mode in that selected time segment and visualise the most probable root cause which causes the temporal courses of the various sensor data in that specific selected time segment.

In a preferred embodiment the failure patterns are ordered according to the ranking of the failure pattern for the selected time interval.

This allows an overview on the most probable root causes for the specific behaviour of the several sensor values in the segment.

In a preferred embodiment those symbolic representations of a failure pattern which match with a symbolic representation of the selected time interval are visualised in a highlighted manner.

This allows a fast identification of those sensors which contributes most to most probable and therefor high ranked failure types. The parameter represented by the sensor data can be checked with highest priority and most relevant inspection tasks can be triggered.

In a preferred embodiment the graphical user interface is configured to additionally display the obtained more than one monitored time series of sensor data over the complete time of observation including an indication of the selected time interval, and/or a detailed view of a second selected time interval of the obtained more than one monitored time series of sensor data.

This allows operation personnel to have a long-term overview on all monitored time series of sensor data over a long period of time and as well as a detailed overview covering only neighbouring time segments. The detailed overview can be related to these overall overviews. The detailed overview can comprise, e.g., at least the selected time interval or a short term in preceding and subsequent time intervals of the selected segment or a combination of selected time interval and preceding and subsequent time intervals.

In a preferred embodiment at least one symbolic representation assigned to the selected time interval can be changed by the user at the graphical user interface and the changed symbolic representation is used as input for an additional assignment of symbolic representations and determining of the ranking of failure pattern.

The additional assignment of the symbolic representation is determined taking into account the changed symbolic representation and can be performed, e.g., for this detected selected time segment, for the selected second time interval or the complete time interval covered by the obtained time series of sensor data.

In a preferred embodiment the assistance apparatus is configured to additionally output an indication of an identified failure type of the technical system (1) and/or output instructions to be applied at the technical system.

An indication of the identified failure type can be an indication in form of a light signal, in form of a respective text message output at the user interface or forwarded to a monitoring or supervising centre. Instructions can be recommendations for activities to analyse the respective one or several sensors or further recommended actions.

A second aspect relates to a computer implemented method for automatically identifying failure types of a technical system, especially for preventive maintenance by analysing monitored time series of more than one different sensor data, each sensor data representing a different parameter of the technical system, comprising
- determining for each sensor data a set of specific temporal courses of first time series of sensor data of said sensor and assign a symbolic representation to each of the different specific temporal courses,
- providing at least one failure pattern, each failure pattern representing one failure type out of several failure types of the technical system and each failure pattern consisting of a failure-type-specific combination of specific temporal courses of the first time series of at least a subset of sensor data in the same segment of time, wherein each specific temporal course is represented by the respective symbolic representation,
- obtaining more than one monitored time series of sensor data of the technical system, each of them divided into a sequence of time segments, and automatically assigning to each time segment a symbolic representations- according to the temporal course of the sensor data in the time segment,
- calculating a similarity measure for the set of symbolic representations of a selected time interval of the obtained more than one monitored time series of sensor data and all failure patterns,
- determining a ranking of the failure pattern depending on decreasing values of a calculated similarity measure and outputting the ranking via a user interface.

A third aspect relates to a computer program product directly loadable into the internal memory of a digital computer comprising software code portions for performing the steps of the computer implemented method as described above for the assistance apparatus when that product is run on the digital computer.

In the following, embodiments of the present disclosure will be described in more detail and with reference to the accompanying drawings.
- Figure 1: illustrates an example of a monitoring environment including an embodiment of the inventive assistance apparatus.
- Figure 2: illustrates an exemplary embodiment of first time series of sensor data and a list of failure types and the related failure type-specific-combination of specific temporal courses of measured parameters of the technical system.
- Figure 3: shows a flow diagram of an embodiment of the inventive method.
- Figure 4: shows an embodiment of symbolic representations according to the inventive method.
- Figure 5: illustrates an embodiment of the assignment of symbolic representations to time segments of a time series of sensor data; and
- Figure 6: illustrates an embodiment of a graphical user interface of the inventive assistance apparatus.

It is noted that in the following detailed description of embodiments the accompanied drawings are only schematic. Rather, the drawings are intended to illustrate functions and the cooperation of functions or components related to the functions. Here, it is to be understood at any connection or coupling of functional blocks, devices, components or other physical or functional elements could also be implemented by an indirect connection or coupling, e.g. via one or more intermediate elements. A connection or coupling of elements or components can be implemented by a wire-based connection, a wireless connection and/or a combination of a wire-based and a wireless connection. Functional blocks can be implemented by dedicated hardware, by firmware, by software and/or by a combination of detected hardware a firmware and/or software.

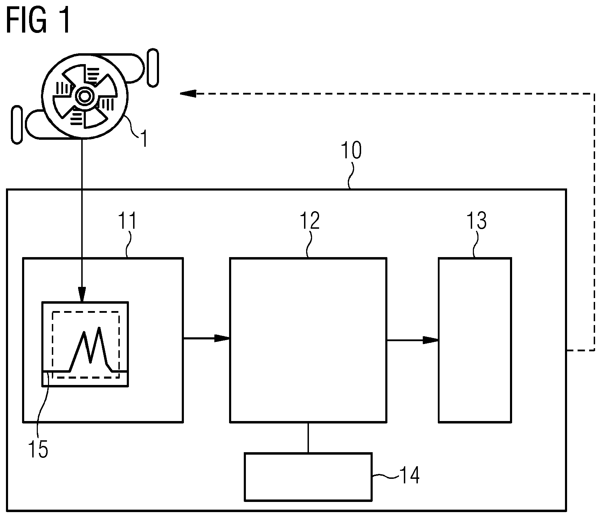

Figure 1 shows a monitoring environment comprising the assistance apparatus 10 for automatically identifying failure types of a monitored technical system 1. Time series of sensor data 15 are obtained by different sensors measuring different parameters of the monitored technical system 1. The assistance apparatus 10 comprises at least one, but more likely several, processors configured such to provide functional steps as described in the following. The processors are structured to form a data input interface 11, an analysing unit 12 and a user interface 13. The data input interface 11 is configured to receive monitored time series of sensor data from the technical system 1. The analysing unit 12 is configured to process the monitored time series of sensor data as described in the following. The user interface 13 is preferably configured as a graphical user interface to output a ranking determined by the analysing unit 12.

The assistance apparatus 10 further comprises a data storage unit 14 to store first time series of sensor data and especially symbolic representations which can be assigned to timelines of sensor data which are subsequently obtained from the technical system one for evaluation.

The assistance apparatus 10 supports a domain expert by automatically suggesting possible root causes/failures types ordered by probability and displayed at the user interface 11.

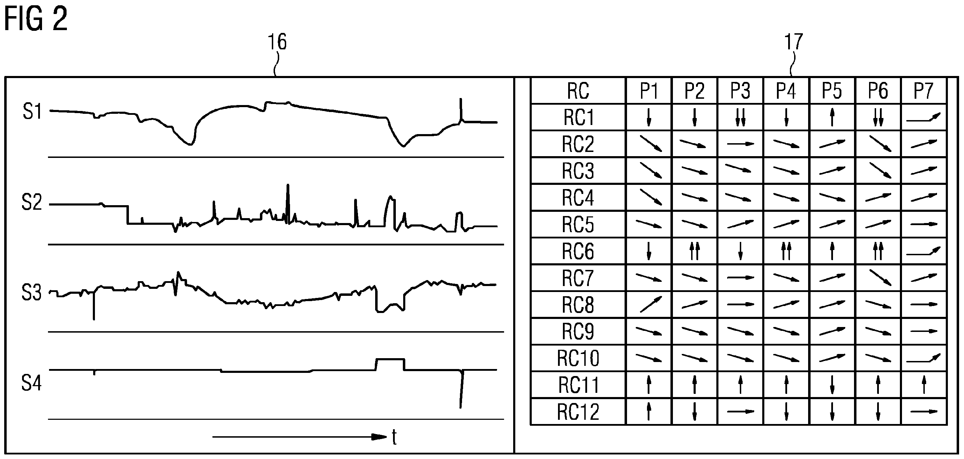

Figure 2 shows an example of first time series of sensor data 16 measured by sensors S1, S2, S3 and S4 over a period of time t at the same or a similar technical system as technical system 1, which shall be monitored. The sensors S1, ..., S4 measure the values of parameters P1, P2, P3 and P4 of the technical system 1. Typical failure types RC of the technical system 1 are listed in checklist 17. A specific temporal course of sensor data is expected in such a failure case. Accordingly, an indication on the expected temporal course of sensor values of various parameters P1, ..., P7 of the technical system 1 are assigned to each failure type RC1, ..., RC12. Failure types are specified, e.g., by a root cause of the failure and relate on component of technical system 1, which does not work correct. In case of a pump, typical failure types RC1, ..., RC12 are a broken shaft, a whole in tubing, or an open choke. The checklist can be based on domain expert knowledge, on manufacturer information or simulation results of the technical system 1.

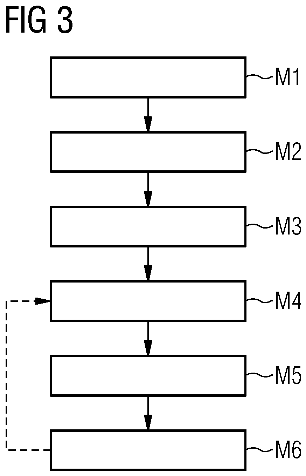

The functional steps or the method, which are performed by the assistance apparatus 10 and the respective method steps are described based on Figures 3 to 5.

In the first step M1, see Fig. 3, the assistance apparatus determines for each sensor data a set of specific temporal courses of first time series of sensor data and assign a symbolic representation to each of the different specific temporal courses. These symbolic representations are assigned based on temporal courses which are observed in first time series of sensor data measured at the same or similar technical system compared to technical system 1. A first time series of sensor data are preferable obtained previous in time with respect to the monitored time series of the technical system 1.

In a second step M2 at least one failure pattern F1, ..., F7 is provided by assigning a set of symbolic representation according to the specific temporal courses of sensor data of the failure type. The assignment can be based on information on the failure type and related temporal courses of dedicated parameters as provided, e.g., by checklist 17. Each failure pattern represents a failure type RC1, ..., RC12. The parameters P1, ..., P7 are related to a sensor S1, ..., S7 providing the time series of sensor data and the indications of the specific course of the sensor data is represented by the respective symbolic representation. Such failure pattern, consisting of an easy to read symbolic representation, will facilitate in representing the specific temporal courses of the set of sensor data contributing to the failure type.

Specific temporal courses are differentiated with respect to a type of gradient of the temporal course to characterise a failure pattern as detailed as possible. Especially, the temporal courses are differentiated related to a positive or negative gradient. A steady course over time means that the sensor value remains constant or deviates only slightly over time. A different symbolic representation is assigned to each of the specific temporal courses.

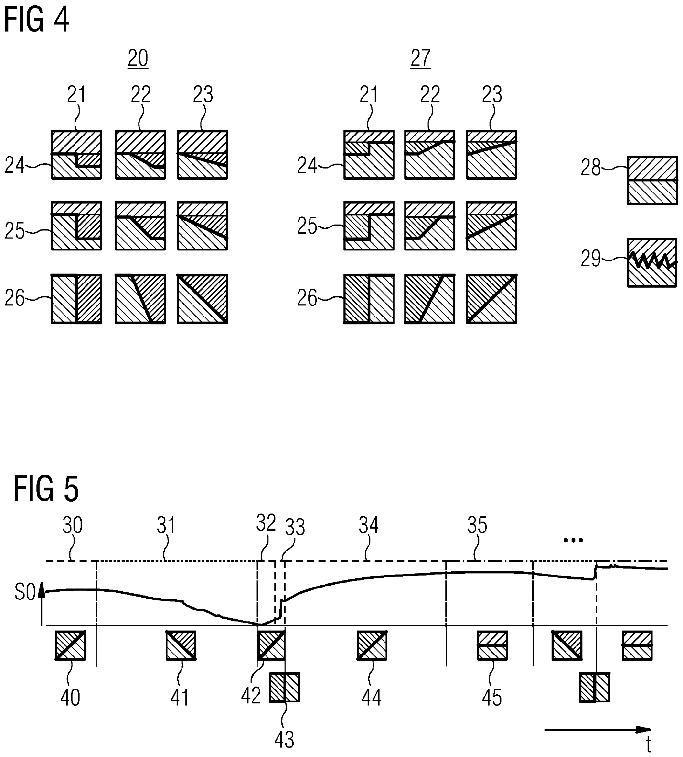

Figure 4 shows a set of symbolic representations 20, 27. A set of symbolic representations 20 comprises symbolic representations for decreasing temporal course, i.e. having a negative gradient. The specific temporal courses are differentiated with respect to the duration of change and/or a magnitude of change. The symbolic representations in column 21, 22 and 23 represent a negative gradient of short, medium, and large duration in time, i.e. a rapid decrease, fast decrease, and slow decrease in time. The symbolic representations in column 24 shows a low magnitude of change in the sensor data value. The symbolic representations in row 25 show a medium magnitude of change, and symbolic representations in row 26 show a high magnitude of change in the sensor value. Different abstract representations are established for each combination duration of change as well as the magnitude of change. Similarly, symbolic representations 27 for increasing specific temporal courses are determined comprising different symbolic representations for different duration of change, see symbolic representations in row 21, 22, 23 of set 27 as well as different symbolic representation different shading in the magnitude of change, see symbolic representation 24, 25 and 26.

Symbolic representations 28 and 29 relate to a steady specific temporal course wherein symbolic representation 28 represents a stable course with low fluctuation in the sensor value, whereas symbolic representation 29 represents constant temporal course showing high fluctuation in the sensor values.

In the third method step M3 the assistance apparatus 10 obtains, e.g., via the data input interface 11 more than one monitored time series of sensor data of the technical system 1, each of time series of sensor data being divided into a sequence of time segments and automatically assigns to each time segment a symbolic representation according to the temporal course the sensor data in the time segment. In other words, one symbolic representation is assigned to each time segment of each time series of sensor data. Preferably the monitored time series of sensor data is already divided into subsequent time segments where each time segment shows only one specific temporal course of the sensor data values. Preferably the temporal duration of the time segments is selected to cover only one specific course of time series.

Figure 5 shows a time series of sensor data S0. The time series of sensor data S0 is divided into subsequent time segments 30, 31 ... 35 and further, wherein each segment 30, 31 ... 35 comprises only sensor data value according to one specific temporal course. The symbolic representations, e.g. the symbolic representations 20, 27 indicating the respective specific temporal course are assigned to the time segments.

For example, segment 31 shows a course of slow decrease but with high magnitude of change. Therefore, the respective symbolic representation 41 is assigned to segment 31. Time segment 32 shows a slow increasing course with a high magnitude of change and the respective symbolic representation 42 is assigned. Segment 33 comprises a rapid increasing temporal course and the related symbolic representation 43 is assigned to this segment 33. Further, symbolic representation 44, 45 and are signed the segments 34, 35. The time segments 30, ..., 35 can be of different length in time depending on the duration of the respective temporal course. The length of the time segments can be determined by various algorithms and is not part of this disclosure. The granularity of different specific temporal courses and the assigned abstract representations can vary for the different time series of sensor data S0, S1, S2, S3, S4.

In the next method step M4 a similarity measure is calculated providing a probability for a set of symbolic representations of a considered time segment matching each failure pattern. Preferably, a binary matching is used as similarity measure and the ranking of the failure pattern is determined depending on the number of matches of the symbolic representations of the various sensor data and the respective symbolic representation of the same sensor data of the failure pattern. Besides the binary matching several further similarity measures can be applied, e.g. applying different weights for each of the sensor values.

In step M5 a ranking of failure pattern is determined depending on decreasing values of the calculated similarity measure. In step M6 the ranking is output via the use interface 13 of the assistance apparatus 10.

The calculation of a similarity measure is performed automatically without any user interaction. Any given metric can be used as distance measure for matching and ranking the failure types. The more symbols of sensors match a certain failure pattern, the higher is the probability that this failure has occurred in the considered time segment. The failure patterns and are ordered according to decreasing probability.

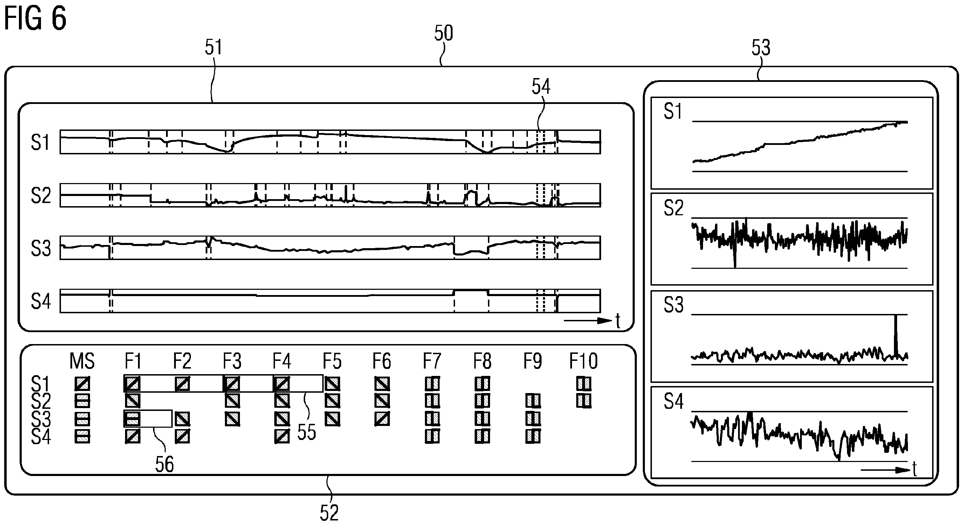

The ranking is output on the user interface 13 of the assistance apparatus 10, which is preferably configured as a graphical user interface. An example embodiment of the graphical user interface is shown in figure 6.

Graphical user interface 50 comprises three zones 51, 52, 53. Zone 51 displays the obtained time series of sensor data S1, S2, S3, S4 over a long period of time providing a complete history and long-term context of the sensor data S1, S2, S3, S4. A user can select a time interval 54, e.g., by mouse or touchscreen input. The selected time interval 54 is shown in detail in zone 53. The symbolic representations MS assigned to the time series of sensor data in the selected time interval 54 are displayed in zone 52 of the graphical user interface 50. Further, a matching matrix is visualised in zone 52 displaying the symbolic representations MS of the selected interval 54 for each sensor in a first column. Each of the following columns display the failure pattern F1,...,F10 in an order according to the ranking, i.e. in the order of decreasing probability of a match. Those abstract representations of the displayed failure pattern F1,...,F10 are highlighted which match with the symbolic representation MS of the selected time interval, see frames 55, 56 in zone 52.

The graphical user interface 50 allows to select at least one symbolic representation of the symbolic representations MS of the selected interval 54 and assign a changed symbolic representation. The changed symbolic representation is used as input for new assignment of symbolic representations to the monitored time series of sensor data and a new ranking is determined based on the new assignment. This new assignment and feedback to the assignment in step M3 is represented in figure 2 by the dashed arrow. This user feedback can be used to improve the matching and ranking and therefor allows a continuous improvement of the assignment of symbolic representations to the time segments and the ranking respectively.

The graphical user interface 50 can interactively change the time period that is shown in zones 52 and 53 by selecting the respective time interval in the overview visualisation in zone 51. In doing so, the user can explore the changes over time related to the assigned symbolic representations for each time interval and the matching and ranking of related respective failure types.

In addition, the assistance apparatus 10 can output an indication of an identified failure type of the technical system 10 and/or output instructions to be applied at the technical system 1. Such instructions can be activities or settings of the technical system 1 and similar. The graphical user interface 50 supports the user in analysing the history of a failure type identified in a selected time interval 54 by analysing and subsequent time segments and their assigned set of symbolic representations MS with respect to the failure patterns F1 ... F10.

The assistance apparatus 10 and the related method substitute a manual monitoring of sensor behaviour by comparing rules with sensor values. Failures and especially the root cause of the failure can be detected more reliable, earlier, and faster. Countermeasures can be applied faster to prevent or limit damages or a suboptimal operation and therefore enabling preventive maintenance. This leads to a significant cost savings or improved utilization. By the graphical user interface operation personnel gets enough information to identify what kind of failure could be present with one glimpse and provides the possibility to drill down further. Depending on the used calculation for symbolical presentation of the actual segment an uncertainty of the algorithm for assigning the symbolic representation can be visualised and considered in ranking the failure types.

It is to be understood that the above description of examples is intended to be illustrative and that the illustrated concepts are susceptible to various modifications.

## Claims

1. Assistance apparatus for automatically identifying failure types of a technical system (1) by analysing monitored time series of more than one different sensor data (S1,...,S4) each sensor data (S1,...,S4) representing a different parameter of the technical system (1), comprising at least one processor configured to
- determine for each sensor data a set of specific temporal courses of first time series of said sensor data and assign a symbolic representation (20, 27) to each of the different specific temporal courses,
- provide at least one failure pattern (F1,...,F10), each failure pattern (F1,...,F10) representing one failure type out of several failure types of the technical system (1) and each failure pattern (F1,...,F10) consisting of a failure-type-specific combination of specific temporal courses of the first time series of at least a subset of sensor data (F1,...,F10) in the same segment of time, wherein each specific temporal course is represented by the respective symbolic representation (20, 27),
- obtain more than one monitored time series of sensor data of the technical system (1), each of them divided into a sequence of time segments (30,...,35), and automatically assign to each time segment (30,...,35) a symbolic representation (20, 27) according to the temporal course of the sensor data (S1,...,S4) in the time segment,
- calculate a similarity measure for the set of symbolic representations of a selected time interval (54) of the obtained more than one monitored time series of sensor data (S1,...,S4) and all failure patterns (F1,...,F10),
- determine a ranking of the failure patterns (F1,...,F10) depending on decreasing values of the calculated similarity measure, and
- output the ranking via a user interface (13).

2. Assistance apparatus according to claim 1, wherein the specific temporal courses are differentiated with respect to a type of gradient of the temporal course of the time series of sensor data, especially a positive or negative gradient, or with respect to a fluctuation of the gradient for a time series of sensor data with steady course over time.

3. Assistance apparatus according to claim 2, wherein the specific temporal courses are differentiated with respect to a value range of the gradient or a magnitude of change in sensor data value.

4. Assistance apparatus according to any of the preceding claims, wherein the time segments (30,...,35) are of different length in time depending on the duration of the respective temporal course.

5. Assistance apparatus according to any of the preceding claims, wherein the failure-type-specific combination of specific temporal courses of at least a subset of time series of sensor data in the same segment of time is determined by domain knowledge.

6. Assistance apparatus according to any of the preceding claims, wherein the similarity measure is a binary matching and the ranking is determined depending on the number of matches.

7. Assistance apparatus according to any of the preceding claims, wherein the user interface (13) is configured as a graphical user interface (50) and the symbolic representations (MS) of a selected time interval (54) and the symbolic representations of the failure patterns (F1,...,F10) are visualized according to the determined ranking for the selected time segment (54) at the graphical user interface (50).

8. Assistance apparatus according to claim 7, wherein the failure patterns (F1,...,F10) are ordered according to the ranking of the failure pattern (F1,...,F10) for the selected time interval (54).

9. Assistance apparatus according to any of claims 7 and 8, wherein those symbolic representations of failure patterns (F1,...,F10) which match with the symbolic representation of the selected time interval (54) are visualized in a highlighted manner.

10. Assistance apparatus according to any of claims 7 and 9, wherein the graphical user interface (50) is configured to additionally display
the obtained more than one monitored time series of sensor data (S1,...,S4) over the complete time of observation including an indication of the selected time interval, and/or
a detailed view of a second selected time interval of the obtained more than one monitored time series of sensor data (S1,...,S4).

11. Assistance apparatus according to any of claims 7 and 10, wherein at least one symbolic representation (20, 27) assigned to the selected time interval (54) can be changed by the user at the graphical user interface (50) and the changed symbolic representation (20, 27) is used as input for an additional assignment of symbolic representations and determining of the ranking of failure pattern.

12. Assistance apparatus according to any of the preceding claims, wherein additionally output an indication of an identified failure type of the technical system (1) and/or output instructions to be applied at the technical system (1).

13. Computer implemented method for automatically identifying failure types of a technical system (1) by analysing monitored time series of more than one different sensor data (S1,...,S4), each sensor data representing a different parameter of the technical system (1), comprising
- determining (M1) for each sensor data a set of specific temporal courses of first time series of sensor data and assign a symbolic representation (20, 27) to each of the different specific temporal courses,
- providing (M2) at least one failure pattern, each failure pattern representing one failure type out of several failure types of the technical system and each failure pattern consisting of a failure-type-specific combination of specific temporal courses of the first time series of at least a subset of sensor data in the same segment of time, wherein each specific temporal course is represented by the respective symbolic representation,
- obtaining (M3) more than one monitored time series of sensor data of the technical system, each of them divided into a sequence of time segments, and automatically assigning to each time segment a symbolic representations- according to the temporal course of the sensor data in the time segment,
- calculating (M4) a similarity measure for the set of symbolic representations of a selected time interval of the obtained more than one monitored time series of sensor data and all failure patterns,
- determining (M5) a ranking of the failure pattern depending on decreasing values of the calculated similarity measure, and
- outputting (M6) the ranking via a user interface.

14. A computer program product directly loadable into the internal memory of a digital computer, comprising software code portions for performing the steps of claim 13 when said product is run on said digital computer.
